# EUROPEAN PATENT SPECIFICATION

(11) **EP 3 689 652 B1**
(45) Date of publication and mention of the grant of the patent: **26.10.2022**
(21) Application number: 18863450.5
(22) Date of filing: 25.09.2018
(51) Int. Cl.: B60H 1/22, B60H 1/00, F25B 41/30, F25B 41/20, F25B 41/24, F25B 41/39

(54) **VEHICULAR AIR-CONDITIONING DEVICE**
FAHRZEUGKLIMAANLAGE
DISPOSITIF DE CLIMATISATION DE VÉHICULE

(30) Priority: 28.09.2017 JP 2017188864
(43) Date of publication of application: 05.08.2020
(73) Proprietor: Valeo Japan Co., Ltd., Saitama 360-0193 (JP)
(72) Inventor: ONODERA, Mutsuhiro, Kumagaya-shi Saitama 360-0193 (JP)
(74) Representative: Valeo Systèmes Thermiques
(86) International application number: PCT/JP2018/035247
(87) International publication number: WO 2019/065548

(56) References cited:
- WO-A1-2016/043309
- JP-A- H0 891 040
- JP-A- 2002 162 132
- JP-A- 2013 180 722
- JP-A- 2013 180 722
- JP-A- 2014 013 094
- JP-A- 2016 095 109
- JP-U- S6 024 977
- US-A- 6 089 034
- US-A1- 2013 227 984

## Description

### Technical Field

The present invention relates to a vehicle air conditioning device which includes a refrigeration cycle in which refrigerant flow paths are switched between by electric automatic valves.

### Background Art

A vehicle air conditioning device for an electric automobile cannot utilize heat, which an internal-combustion engine generates, for heating, and so uses refrigeration cycle heat exchangers or an electric heater in order to heat the air. A vehicle air conditioning device for an electric automobile, described in Japanese Patent No.5 423 181, includes a refrigeration cycle including a compressor which takes in, compresses, and discharges a refrigerant, one external heat exchanger which exchanges heat between the refrigerant and external air, and two internal heat exchangers (an air cooling heat exchanger and an air heating heat exchanger) which exchange heat between the refrigerant and blow air to be blown into a vehicle interior, and further includes an electric PTC heater for air heating.

In the air conditioning device of the cited literature 1, the flow of the refrigerant is changed over by switching on and off on-off valves, which are each formed of an electromagnetic valve which is an electric automatic valve, and/or direction selector valves, such as three-way valves, in accordance with operation modes (cooling, heating, and the like) . In the air conditioning device of the cited literature 1, the on-off valves and the direction selector valves are each configured so that a refrigerant flow corresponding to the cooling mode is realized when the supply of power to the on-off valves and direction selector valves is stopped. Thereby, power consumption by the whole vehicle air conditioning device can be kept down when in the cooling mode which is high in frequency of usage. Also, the electromagnetic valves are not energized when the ambient temperature at which the cooling mode is used is high (for example, in summer), and thereby it is possible to prevent an abnormal rise in the temperature of the electromagnetic valves and a failure resulting therefrom.

It is when the vehicle air conditioning device of the type of the cited Japanese Patent No.5 423 181 is operated in the heating mode in winter in which the ambient temperature is low, however, that the amount of power consumption per unit time by the vehicle air conditioning device is largest. The electric PTC heater, which is not used in the cooling mode, is used in the heating mode (particularly at the initial stage of starting the heating mode), thus increasing the amount of power consumption. It is not preferable to energize the electromagnetic valves, at this time, because it increases the burden on a power supply system (a battery). Also, it is not preferable to energize the electromagnetic valves in winter, in which the amount of power consumption is large, because it leads to a widening gap in vehicle miles driven between in summer and in winter.

US 2013/227984 A1 describes a vehicle air conditioning device comprising a heating circuit. JP 2013 180722 A and WO 2016/043309 A1 describe refrigerant circuits forming cooling circuits with all valves in a non powered position.

### Summary of Invention

### Technical Problem

The invention has for its object to provide a vehicle air conditioning device which can suppress power consumption when in a heating mode.

### Solution to Problem

According to the invention, a vehicle air conditioning device is provided which includes a refrigerant circuit including a compressor which compresses a refrigerant, an external heat exchanger which exchanges heat between the refrigerant and the outside air, and at least one internal heat exchanger which exchanges heat between the refrigerant and the air fed into a vehicle interior; and a plurality of electric automatic valves, provided in the refrigerant circuit, with which to change a refrigerant flow path in the refrigerant circuit in order to switch between operation modes of the vehicle air conditioning device, wherein the refrigerant circuit and the plurality of automatic valves are configured so that a refrigerant flow path for a heating mode can be formed when none of the plurality of automatic valves are supplied with power.

### Advantageous Effects of Invention

According to the invention, a configuration is such that the refrigerant flow path for the heating mode is formed when none of the plurality of automatic valves are supplied with power, so that it is possible to reduce power consumption by the whole air conditioning device when in the heating mode.

### Brief Description of Drawings

[Fig. 1] Fig. 1 is a diagram showing a refrigerant circuit of a vehicle air conditioning device according to one embodiment of the invention, and a diagram representing an operation of the vehicle air conditioning device when in a heating mode.
[Fig. 2] Fig. 2 is a diagram, similar to that of Fig. 1, which represents an operation of the vehicle air conditioning device when in a first dehumidification heating mode (when the outside temperature is low).
[Fig. 3] Fig. 3 is a diagram, similar to that of Fig. 1, which represents an operation of the vehicle air conditioning device when in a second dehumidification heating mode (when the outside temperature is medium).
[Fig. 4] Fig. 4 is a diagram, similar to that of Fig. 1, which represents an operation of the vehicle air conditioning device when in a third dehumidification heating mode (when the outside temperature is high).
[Fig. 5] Fig. 5 is a diagram, similar to that of Fig. 1, which represents an operation of the vehicle air conditioning device when in a cooling mode.
[Fig. 6] Fig. 6 is a diagram showing a refrigerant circuit of a vehicle air conditioning device according to a modified embodiment, and a diagram representing an operation of the vehicle air conditioning device when in the cooling mode.

### Description of Embodiments

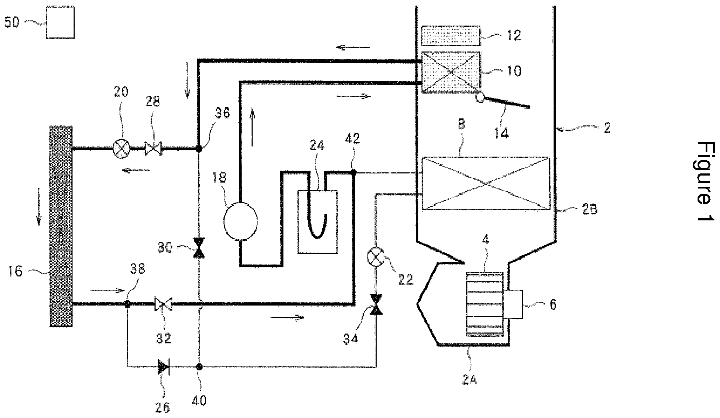

Hereinafter, a description will be given, with reference to Figs. 1 to 5, of one embodiment of a vehicle air conditioning device according to the invention. The vehicle air conditioning device is suitably used for an electric automobile which, without having an internal-combustion engine, obtains a vehicle-running drive force from a running electric motor, or for a hybrid vehicle which obtains a vehicle-running drive force from an internal-combustion engine and a running electric motor.

The vehicle air conditioning device has, as operation modes, a heating mode in which to heat a vehicle interior, a dehumidification heating mode in which to heat, while dehumidifying, the vehicle interior, and a cooling mode in which to cool the vehicle interior. The dehumidification heating mode is classified into a first dehumidification heating mode to be applied when the outside temperature is relatively low, a second dehumidification heating mode to be applied when the outside temperature is medium, and a third dehumidification heating mode to be applied when the outside temperature is relatively high.

The vehicle air conditioning device has an air conditioning device casing 2. The air conditioning device casing 2 has an upstream side blower portion 2A and a downstream side blow path portion 2B. An impeller 4 is provided in the blower portion 2A. The impeller 4 is rotary driven by an electric rotary motor 6. Thereby, outside air and/or inside air sucked into the blower portion 2A is blown out to the blow path portion 2B, and after passing through the blow path portion 2B, flows out into the vehicle interior (not shown).

A cooling internal heat exchanger 8, a heating internal heat exchanger 10, an electric heater 12 (in this example, a PTC heater), and an air mix door 14 are provided in the blow path portion 2B. All the air having flowed into the blow path portion 2B passes through the cooling internal heat exchanger 8. The air having passed through the cooling internal heat exchanger 8 splits up into a first flow which passes through the heating internal heat exchanger 10 and electric heater 12 and flows downstream and a second flow which bypasses the heating internal heat exchanger 10 and electric heater 12 and flows downstream. The flow ratio of the first and second flows is determined in accordance with the position of the air mix door 14.

The vehicle air conditioning device may be of a two-layer flow type.

The vehicle air conditioning device includes a refrigerant circuit as shown in Fig. 1, and a refrigerant (for example, a fluorocarbon refrigerant such as HFC-134a) containing a predetermined amount of lubricant circulates through the refrigerant circuit.

In addition to the heretofore described cooling internal heat exchanger 8 and heating internal heat exchanger 10, an external heat exchanger 16, a compressor 18, expansion valves 20, 22, an accumulator 24, a check valve 26, and on-off valves 28, 30, 32, 34 are provided in the refrigerant circuit.

The external heat exchanger 16 is usually disposed, adjacent to the rear of a radiator grille of the vehicle, in an engine room.

It is preferable, when adopting the configuration shown in Figs. 1 to 5, to use an electronic expansion valve as the expansion valve 20 provided on the immediate upstream side of the external heat exchanger 16. This kind of electronic expansion valve is such that the opening degree thereof can, based on a detection value of a temperature sensor (not shown) provided on the immediate downstream side of the external heat exchanger 16, be adjusted so that the refrigerant evaporates appropriately in the external heat exchanger 16. By adopting this kind of electronic expansion valve, a large opening degree of the expansion valve 20 (an amount of opening degree at which it substantially does not act as an expansion valve) can be realized (this function cannot be realized with a thermostatic expansion valve) regardless of the detection value of the temperature sensor.

When adopting the configuration shown in Figs. 1 to 5, either one of an electronic expansion valve or a thermostatic expansion valve may be adopted as the expansion valve 22 which is on the immediate upstream side of the cooling internal heat exchanger 8, and it is only necessary to determine which one is to be adopted in consideration of required performance and costs. The thermostatic expansion valve is such that the opening degree thereof changes in accordance with the pressure of gas to be fed from a temperature sensing tube which is on the immediate downstream side of the cooling internal heat exchanger 8.

The compressor 18 has a motor which drives the same compressor with power or is mechanically connected to the motor. The compressor 18 is sometimes called an electric compressor.

The on-off valves 28, 30, 32, 34 are each formed of an electric automatic valve, specifically, an electromagnetic valve (solenoid valve). The flow path of the refrigerant in the refrigerant circuit is changed by switching on and off the on-off valves 28, 30, 32, 34, enabling switching between the operation modes, to be described hereinafter, to be carried out.

The accumulator 24 has its role as a gas-liquid separator which carries out gas-liquid separation of the refrigerant having flowed in and accumulates a surplus refrigerant inside the separator.

The electric rotary motor 6, the air mix door 14 (specifically, a not-shown actuator of the air mix door 14), the compressor 18 (specifically, a not-shown drive motor of the compressor 18), and the on-off valves 28, 30, 32, 34 operate with a control current sent from a refrigerant circuit switching control portion 50 (may operate based on a control signal sent from the refrigerant circuit switching control portion 50).

Next, a description will be given of an operation of the vehicle air conditioning device. The display patterns in Figs. 1 to 5 denote the followings. - The refrigerant is not flowing through the outlined heat exchangers, and the refrigerant is flowing though the lightly shaded heat exchangers (8, 10, 16) in a state in which it can heat the air passing through the same heat exchangers, and the refrigerant is flowing through the heavily shaded heat exchangers in a state in which it can cool the air passing through the same heat exchangers. - The outlined electric heater 12 is not energized, and the shaded electric heater 12 is energized and generates heat. - The outlined on-off valves (28, 30, 32, 34) are open, and the filled-in on-off valves are closed. - The outlined expansion valves (20, 22) are in a fully open position and do not act as expansion valves, and the filled-in expansion valves are throttled to a controlled opening degree (or a predetermined opening degree). - The refrigerant flows through the pipelines drawn in the thick line, and the refrigerant does not flow through the pipelines drawn in the thin line.

### [Heating Mode]

In the heating mode shown in Fig. 1, the on-off valve 34 is closed, so that the refrigerant is not flowing through the cooling internal heat exchanger 8. Consequently, the air flowing through the inside of the blow path portion 2B flows to the downstream side without being cooled when passing through the cooling internal heat exchanger 8. The air mix door 14 in the position shown in Fig. 1 allows all the air having passed through the cooling internal heat exchanger 8 to pass through the heating internal heat exchanger 10.

The refrigerant, which has been compressed by the compressor 18 into a high-temperature and high-pressure gas, is flowing through the heating internal heat exchanger 10. Consequently, the air flowing through the inside of the blow path portion 2B, when passing through the heating internal heat exchanger 10, exchanges heat with the refrigerant, thereby heating the air flowing through the inside of the blow path portion 2B. The heated air, after being further heated by the electric heater 12, is blown out into the vehicle interior. The electric heater 12 is supplied with power which is maximum or close to maximum in the scope of design.

By being heat exchanged in the heating internal heat exchanger 10, the refrigerant is cooled into a high-pressure and medium-temperature liquid. The refrigerant having flowed out from the heating internal heat exchanger 10 flows into the expansion valve 20 through a branch point 36 and the open on-off valve 28, and expands in the expansion valve 20, thereby turning to a low-temperature and low-pressure gas-liquid mixture. Subsequently, the refrigerant flows through the external heat exchanger 16, and at this time, exchanges heat with the outside air. Thereby, the refrigerant absorbs heat from the outside air and evaporates (is vaporized) into a low-temperature and low-pressure gas.

The refrigerant flows into the accumulator 24 through a branch point 38, the open on-off valve 32, and a meeting point 42. An unvaporized refrigerant is separated in the accumulator 24, and a gaseous refrigerant flows again into the compressor 18.

In the embodiment, switching between the operation modes of the air conditioning device is carried out by changing the refrigerant flow path in the refrigerant circuit by switching on and off the on-off valves 28, 30, 32, 34 each formed of an electromagnetic valve which is an electric automatic valve. Here, the on-off valves 28, 32 are normally open (open when de-energized) electromagnetic valves, and the on-off valves 30, 34 are normally closed (closed when de-energized) electromagnetic valves. Because of this, a configuration is such that the refrigerant flow path for the heating mode is formed when none of the on-off valves 28, 30, 32, 34 are supplied with power (power for driving the valves). For this reason, power consumption by the whole air conditioning device can be reduced at a low-temperature time when the burden on an in-vehicle battery grows.

### [First Dehumidification Heating Mode]

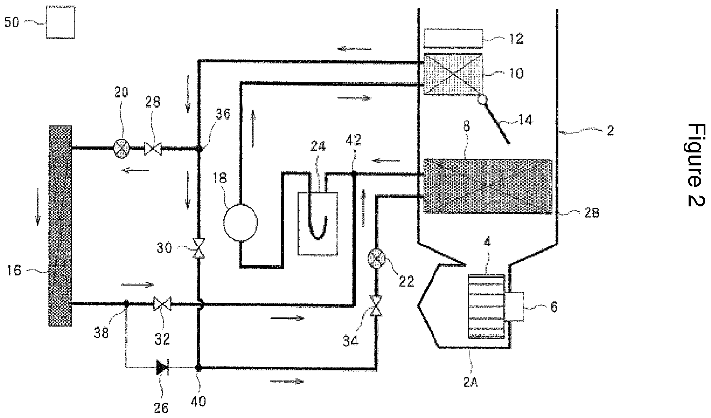

In the first dehumidification heating mode (applied when the outside temperature is low) shown in Fig. 2, the on-off valve 34 is open, so that the refrigerant is flowing through the cooling internal heat exchanger 8. Consequently, the air flowing through the inside of the blow path portion 2B is cooled when passing through the cooling internal heat exchanger 8 and flows to the downstream side. Moisture in the air is condensed on the cooling internal heat exchanger 8 by the cooling and is thereby removed. The electric heater 12 is not energized but may be energized as needed. When energized, the electric heater 12 is supplied with, for example, medium power in the scope of design.

The air mix door 14 in the position shown in Fig. 2 allows a relatively large amount (for example, about 70%) of the air having passed through the cooling internal heat exchanger 8 to pass through the heating internal heat exchanger 10, and the remainder to bypass the heating internal heat exchanger 10.

The refrigerant, which has been compressed by the compressor 18 into a high-temperature and high-pressure gas, is flowing through the heating internal heat exchanger 10. Consequently, the air flowing through the inside of the blow path portion 2B, when passing through the heating internal heat exchanger 10, exchanges heat with the refrigerant, thereby heating the air flowing through the inside of the blow path portion 2B. The heated air is blown out into the vehicle interior after being mixed with the air having bypassed the heating internal heat exchanger 10.

The refrigerant, which has been cooled into a high-pressure and medium-temperature liquid by the heat exchange in the heating internal heat exchanger 10, flows into the branch point 36 and is branched there into two flows. In the same way as when in the heating mode shown in Fig. 1, a first flow returns to the compressor 18 through the open on-off valve 28, expansion valve 20, external heat exchanger 16, branch point 38, open on-off valve 32, meeting point 42, and accumulator 24 in series. In the same way as when in the heating mode, the first flow of refrigerant, when passing through the external heat exchanger 16, absorbs heat from the outside air, evaporates (is vaporized) into a low-temperature and low-pressure gas, and flows into the compressor 18.

A second flow of refrigerant having flowed out from the branch point 36 flows into the expansion valve 22 through the open on-off valve 30, a meeting point 40, and the open on-off valve 34, and expands in the expansion valve 22, thereby turning to a low-temperature and low-pressure gas-liquid mixture. Subsequently, the refrigerant flows through the cooling internal heat exchanger 8, and at this time, exchanges heat with the air flowing through the inside of the blow path portion 2B. Thereby, the refrigerant absorbs heat from the air and thereby evaporates (is vaporized) into a low-temperature and low-pressure gas. Subsequently, the refrigerant flows into the meeting point 42 and meets the first flow of refrigerant, and thereafter, returns to the compressor 18 through the accumulator 24.

### [Second Dehumidification Heating Mode]

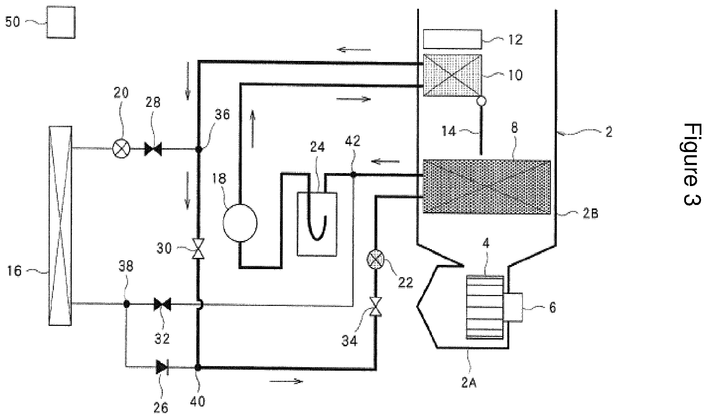

In the second dehumidification heating mode (applied when the outside temperature is medium) shown in Fig. 3, in the same way as in the first dehumidification heating mode, the on-off valve 34 is open, so that the refrigerant is flowing through the cooling internal heat exchanger 8. Consequently, the air flowing through the inside of the blow path portion 2B is cooled when passing through the cooling internal heat exchanger 8 and flows to the downstream side. Moisture in the air is condensed on the cooling internal heat exchanger 8 by the cooling and is thereby removed. The electric heater 12 is not energized but may be energized as needed. When energized, the electric heater 12 is supplied with, for example, medium power in the scope of design.

The air mix door 14 in the position shown in Fig. 3 allows about half the amount (for example, about 50%) of the air having passed through the cooling internal heat exchanger 8 to pass through the heating internal heat exchanger 10, and the remainder to bypass the heating internal heat exchanger 10.

The refrigerant, which has been compressed by the compressor 18 into a high-temperature and high-pressure gas, is flowing through the heating internal heat exchanger 10. Consequently, the air flowing through the inside of the blow path portion 2B, when passing through the heating internal heat exchanger 10, exchanges heat with the refrigerant, thereby heating the air flowing through the inside of the blow path portion 2B. The heated air is blown out into the vehicle interior after being mixed with the air having bypassed the heating internal heat exchanger 10.

The refrigerant, which has been cooled into a high-pressure and medium-temperature liquid by the heat exchange in the heating internal heat exchanger 10, flows into the expansion valve 22 through the branch point 36, open on-off valve 30, meeting point 40, and open on-off valve 34, and expands in the expansion valve 22, thereby turning to a low-temperature and low-pressure gas-liquid mixture. Subsequently, the refrigerant flows through the cooling internal heat exchanger 8, and at this time, exchanges heat with the air flowing through the inside of the blow path portion 2B. Thereby, the refrigerant absorbs heat from the air and evaporates (is vaporized) into a low-temperature and low-pressure gas. Subsequently, the refrigerant returns to the compressor 18 through the meeting point 42 and accumulator 24.

In the second dehumidification heating mode, the on-off valve 28 is closed, so that the refrigerant is not allowed to flow through the external heat exchanger 16, and the heat exchange in the external heat exchanger 16 is not carried out. Also, the on-off valve 28 is closed, so that the expansion valve 20 is in an arbitrary position (in Fig. 3, in a fully open position).

### [Third Dehumidification Heating Mode]

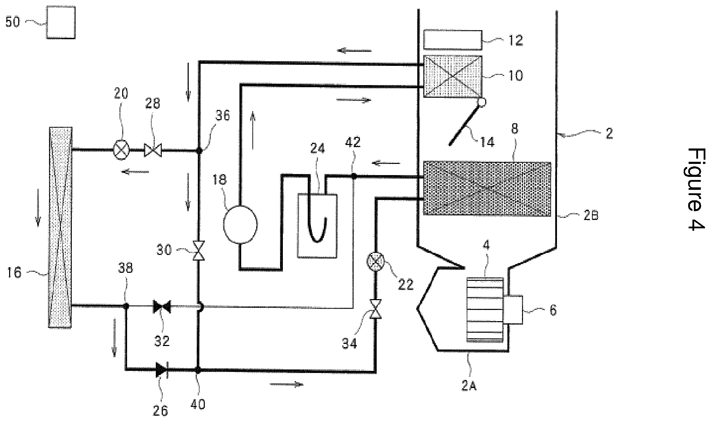

In the third dehumidification heating mode (applied when the outside temperature is high) shown in Fig. 4, in the same way as in the first and second dehumidification heating modes, the on-off valve 34 is open, so that the refrigerant is flowing through the cooling internal heat exchanger 8. Consequently, the air flowing through the inside of the blow path portion 2B is cooled when passing through the cooling internal heat exchanger 8 and flows to the downstream side. Moisture in the air is condensed on the cooling internal heat exchanger 8 by the cooling and is thereby removed. The electric heater 12 is not energized but may be energized as needed. When energized, the electric heater 12 is supplied with, for example, power which is minimum or close to minimum in the scope of design.

The air mix door 14 in the position shown in Fig. 4 allows a relatively small amount (for example, about 30%) of the air having passed through the cooling internal heat exchanger 8 to pass through the heating internal heat exchanger 10, and the remainder to bypass the heating internal heat exchanger 10.

The refrigerant, which has been compressed by the compressor 18 into a high-temperature and high-pressure gas, is flowing through the heating internal heat exchanger 10. Consequently, the air flowing through the inside of the blow path portion 2B, when passing through the heating internal heat exchanger 10, exchanges heat with the refrigerant, thereby heating the air flowing through the inside of the blow path portion 2B. The heated air is blown out into the vehicle interior after being mixed with the air having bypassed the heating internal heat exchanger 10.

The refrigerant, which has been cooled into a high-pressure and medium-temperature liquid by the heat exchange in the heating internal heat exchanger 10, flows into the branch point 36 and is branched there into two flows. A first flow passes through the external heat exchanger 16 through the open on-off valve 28 and expansion valve 20 which is adjusted in its opening degree to be fully open. At this time, the expansion valve 20 is in a fully open position, so that the refrigerant, in a high-pressure and medium-temperature liquid state, passes through the external heat exchanger 16. At this time, the refrigerant exchanges heat with the outside air and is further reduced in temperature. The refrigerant having flowed out from the external heat exchanger 16 flows into the meeting point 40 through the branch point 38 and check valve 26. A second flow having flowed out from the branch point 36 flows into the meeting point 40 without passing through the external heat exchanger 16 and meets the first flow. The second flow of refrigerant is higher in temperature than the first flow of refrigerant.

The refrigerant having flowed out from the meeting point 40 flows into the expansion valve 22 through the open on-off valve 34 and expands in the expansion valve 22, thereby turning to a low-temperature and low-pressure gas-liquid mixture. Subsequently, the refrigerant flows through the cooling internal heat exchanger 8, and at this time, exchanges heat with the air flowing through the inside of the blow path portion 2B. Thereby, the refrigerant absorbs heat from the air and thereby evaporates (is vaporized) into a low-temperature and low-pressure gas. Subsequently, the refrigerant returns to the compressor 18 through the meeting point 42 and accumulator 24.

In the third dehumidification heating mode, the on-off valve 32 is closed, and the refrigerant does not flow through the pipeline in which the on-off valve 32 is inserted. As a result, all the refrigerant flowing through the refrigerant circuit can be heat exchanged by being allowed to flow through the cooling internal heat exchanger 8, and the air flowing through the inside of the blow path portion 2B can reliably be cooled in a situation in which the outside air is relatively high in temperature.

### [Cooling Mode]

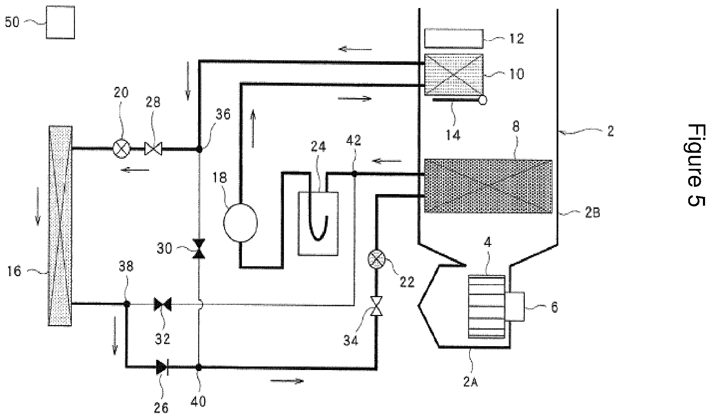

In the cooling mode shown in Fig. 5, the on-off valve 34 is open, so that the refrigerant is flowing through the cooling internal heat exchanger 8. Consequently, the air flowing through the inside of the blow path portion 2B is cooled when passing through the cooling internal heat exchanger 8 and flows to the downstream side. Moisture in the air is condensed on the cooling internal heat exchanger 8 by the cooling and is thereby removed. The electric heater 12 is not energized.

The air mix door 14 in the position shown in Fig. 5 allows almost all the air having passed through the cooling internal heat exchanger 8 to bypass the heating internal heat exchanger 10. Consequently, the air cooled by the cooling internal heat exchanger 8 is blown out into the vehicle interior as it is.

The refrigerant, which has been compressed by the compressor 18 into a high-temperature and high-pressure gas, is flowing through the heating internal heat exchanger 10, but as heretofore described, little heat exchange is carried out in the heating internal heat exchanger 10, so that the refrigerant flows out from the heating internal heat exchanger 10 while remaining in the high-temperature and high-pressure liquid state.

After that, the refrigerant passes through the external heat exchanger 16 through the branch point 36, open on-off valve 28, and expansion valve 20 which is adjusted in its opening degree to be fully open. At this time, the expansion valve 20 is in a fully open position, so that the refrigerant, in a high-pressure and high-temperature liquid state, passes through the external heat exchanger 16. At this time, the refrigerant exchanges heat with the outside air and thereby is reduced in temperature, turning to a medium-temperature and high-pressure liquid. The refrigerant having flowed out from the external heat exchanger 16 flows into the expansion valve 22 through the branch point 38, check valve 26, meeting point 40, and open on-off valve 34, and expands in the expansion valve 22, thereby turning to a low-temperature and low-pressure gas-liquid mixture.

Subsequently, the refrigerant flows through the cooling internal heat exchanger 8, and at this time, exchanges heat with the air flowing through the inside of the blow path portion 2B. Thereby, the refrigerant absorbs heat from the air and thereby evaporates (is vaporized) into a low-temperature and low-pressure gas. Subsequently, the refrigerant returns to the compressor 18 through the meeting point 42 and accumulator 24.

In the cooling mode, the on-off valves 30, 32 are closed, and the refrigerant does not flow through the pipelines in which the on-off valves 30, 32 are inserted. In particular, by the on-off valve 32 being closed, all the refrigerant flowing through the refrigerant circuit can be heat exchanged by being allowed to flow through the cooling internal heat exchanger 8, and the air flowing through the inside of the blow path portion 2B can reliably be cooled.

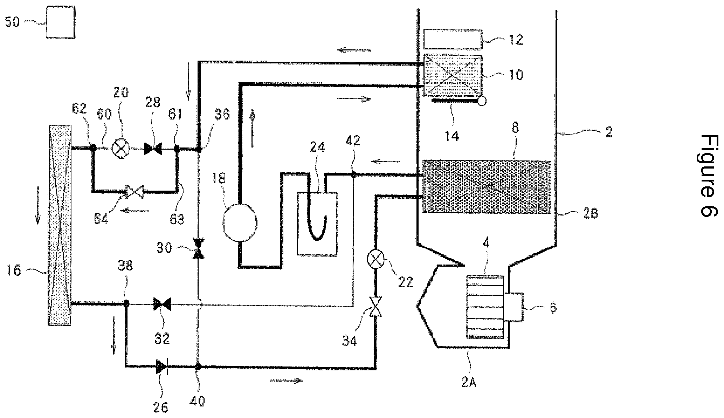

In the heretofore mentioned embodiment, the branch point 36 and the external heat exchanger 16 are connected by a single pipeline, and the on-off valve 28 and the expansion valve 20 are inserted, in this order from the upstream side, in the pipeline, but the invention not being limited thereto, the configuration as shown in Fig. 6 may be adopted.

In a modified embodiment shown in Fig. 6, a bypass pipeline 63 is provided which branches at a branch point 61 from a pipeline 60 (also called a main pipeline 60) connecting the branch point 36 and external heat exchanger 16 and which meets the main pipeline 60 at a meeting point 62. The on-off valve 28 and the expansion valve 20 are inserted, in this order from the upstream side, between the branch point 61 and meeting point 62 of the main pipeline 60, and an on-off valve 64 is inserted in the bypass pipeline 63. The configurations of the other portions of the vehicle air conditioning device are identical to those of Figs. 1 to 5, and the redundant description will be omitted.

In the modified embodiment shown in Fig. 6, when the third dehumidification heating mode and the cooling mode are executed, the on-off valve 28 is closed, while the on-off valve 64 is opened, and the refrigerant is fed to the external heat exchanger 16 via the bypass pipeline 63. When the heating mode and the first dehumidification heating mode are executed, the on-off valve 28 is opened, while the on-off valve 64 is closed, and the refrigerant is fed to the external heat exchanger 16 via the expansion valve 20 of the main pipeline 60. When the second dehumidification heating mode is executed, the on-off valve 28 and the on-off valve 64 are closed, and the refrigerant does not flow through the main pipeline 60. Fig. 6 shows the state in which the cooling mode is being executed.

In the modified embodiment shown in Fig. 6, the on-off valve 28 is normally open, and the on-off valve 64 is normally closed. By so doing, the refrigerant flow path for the heating mode is formed when none of the on-off valves are energized.

In the modified embodiment shown in Fig. 6, the expansion valve 20 does not have to be able to realize a large opening degree (an amount of opening degree at which the expansion valve 20 substantially does not act as an expansion valve). Also, the expansion valve 20 may be an electronic expansion valve and may be a thermostatic expansion valve.

In the heretofore described embodiment, all the switching means for changing the refrigerant flow path in the refrigerant circuit are the on-off valves (28, 30, 32, 34), but the invention not being limited thereto, the switching means may include a direction selector valve, such as a three-way valve or a four-way valve. This kind of direction selector valve is also formed of an electromagnetic valve which is an electric automatic valve, and when de-energized, falls into a kind of position in which the refrigerant flow path for the heating mode is formed.

Another modified embodiment (not shown) is such that an electronic expansion valve with on-off valve function may be used as the expansion valve 20 provided on the immediate upstream side of the external heat exchanger 16, and in this case, the on-off valve 28 can be omitted. By so doing, the number of parts is reduced, enabling it easy to assemble the refrigerant circuit. The electronic expansion valve with on-off valve function is configured so that the opening degree thereof after the electronic expansion valve is stopped being energized (supplied with drive power) can be fixed to an opening degree immediately before the stop of the energization. Consequently, the electronic expansion valve can be placed in any one of a fully open position, a fully closed position, or a throttled position with a certain opening degree, after being stopped being energized. The heretofore mentioned function can be realized by sending the control current (or the control signal) to the electronic expansion valve (20) from the refrigerant circuit switching control portion 50, adjusting the opening degree of the electronic expansion valve (20) to an opening degree to be realized after the stop of energization, and thereafter, stopping the supply of the control current (drive power) to the electronic expansion valve (20) from the refrigerant circuit switching control portion 50, or sending a control signal to stop energizing the electronic expansion valve (20). An electronic expansion valve having this kind of function is publicly known per se.

When the heretofore described electronic expansion valve is adopted as the expansion valve 20 to omit the on-off valve 28, the electronic expansion valve (20) corresponds to an electric automatic valve for changing the refrigerant flow path in the refrigerant circuit in order to carry out switching between the operation modes of the air conditioning device. The heretofore described electronic expansion valve (20) can realize a position in which it is throttled to a certain opening degree without being energized, so that in this modified embodiment, too, the air conditioning device can be caused to operate in the heating mode without supplying power to any of the electric automatic valves provided in the refrigerant circuit in order to change the refrigerant flow path in the refrigerant circuit.

When utilizing the electronic expansion valve (20) as a throttle valve with a fixed opening degree, it is difficult to control refrigerant evaporation in the external heat exchanger 16, with a high degree of precision, as is the case with adopting the thermostatic expansion valve, but the function of adiabatically expanding the refrigerant flowing into the external heat exchanger 16 can be fulfilled to a certain degree.

In the heretofore mentioned modified embodiment, the electronic expansion valve (20) can be caused to operate as an expansion valve of automatic opening degree control when in the first dehumidification heating mode, be put into a fully closed position (whether energized or de-energized) when in the second dehumidification heating mode, be put into a fully open position (whether energized or de-energized) when in the third dehumidification heating mode, and be put into a fully open position (whether energized or de-energized) when in the cooling mode.

In the same way as heretofore mentioned, the expansion valve 22 on the immediate upstream side of the cooling internal heat exchanger 8 may be replaced by an electronic expansion valve with on-off valve function, and the on-off valve 34 may be omitted (this configuration is not shown either) . In this case, it is only necessary, when in the heating mode, to put the electronic expansion valve (22) into a de-energized, fully closed position. In this case, too, the number of parts is reduced, enabling it easy to assemble the refrigerant circuit.

## Claims

1. A vehicle air conditioning device, comprising:
a refrigerant circuit including a compressor (18) which compresses a refrigerant, an external heat exchanger (16) which exchanges heat between the refrigerant and the outside air, and at least one internal heat exchanger (8, 10) which exchanges heat between the refrigerant and the air fed into a vehicle interior; and
a plurality of electric automatic valves (20, 22, 28, 30, 32, 34), provided in the refrigerant circuit, with which to change a refrigerant flow path in the refrigerant circuit in order to switch between operation modes of the vehicle air conditioning device, **characterized in that**
the refrigerant circuit and the plurality of automatic valves are configured so that a refrigerant flow path for a heating mode can be formed when none of the plurality of automatic valves are supplied with power.

2. The vehicle air conditioning device according to claim 1, wherein
the plurality of automatic valves include electromagnetic valves (28, 30, 32, 34).

3. The vehicle air conditioning device according to claim 2, wherein
the electromagnetic valves are each formed of the on-off valve (28, 30, 32, 34) or a direction selector valve.

4. The vehicle air conditioning device according to claim 1, wherein
the plurality of automatic valves include electronic expansion valves (20, 22), and the electronic expansion valves are configured so that, by stop energizing the electronic expansion valves, the opening degree thereof can be fixed to an opening degree immediately before the stop of the energization.

5. The vehicle air conditioning device according to claim 1, further comprising:
an electric heater (12) which heats the air fed into the vehicle interior when operating the vehicle air conditioning device in the heating mode.

6. The vehicle air conditioning device according to claim 1, wherein
the at least one internal heat exchanger includes a cooling internal heat exchanger (8) with which to cool the air fed into the vehicle interior and a heating internal heat exchanger (10) with which to heat the air fed into the vehicle interior, wherein
when the vehicle air conditioning device is operated in the heating mode, the refrigerant flows through the flow path including the compressor (18), the heating internal heat exchanger (10) and external heat exchanger (16), and the refrigerant does not flow through the cooling internal heat exchanger (8).

7. The vehicle air conditioning device according to claim 6, wherein
the operation modes of the vehicle air conditioning device have, in addition to the heating mode, a dehumidification heating mode in which the refrigerant flows through the flow path including at least the compressor (18), heating internal heat exchanger (10) , and cooling internal heat exchanger (8), wherein
at least partial ones (30, 34; 28, 30, 32, 34; 30, 32, 34) of the plurality of automatic valves when in the dehumidification heating mode are in a different position from when in the heating mode.

## Patentansprüche

1. Fahrzeugklimatisierungsvorrichtung, umfassend:
einen Kältemittelkreislauf, beinhaltend einen Verdichter (18), der ein Kältemittel verdichtet, einen externen Wärmetauscher (16), der Wärme zwischen dem Kältemittel und der Außenluft austauscht, und mindestens einen internen Wärmetauscher (8, 10), der Wärme zwischen dem Kältemittel und der einem Fahrzeuginnenraum zugeführten Luft austauscht; und
eine Vielzahl elektrischer automatischer Ventile (20, 22, 28, 30, 32, 34), die im Kältemittelkreislauf bereitgestellt sind und mit denen ein Kältemittelströmungsweg im Kältemittelkreislauf geändert werden kann, um zwischen Betriebsarten der Fahrzeugklimatisierungsvorrichtung umzuschalten,
**dadurch gekennzeichnet, dass**
der Kältemittelkreislauf und die Vielzahl automatischer Ventile so ausgelegt sind, dass ein Kältemittelströmungsweg für einer Heizbetriebsart gebildet werden kann, wenn keines der Vielzahl automatischer Ventile mit Strom versorgt wird.

2. Fahrzeugklimatisierungsvorrichtung nach Anspruch 1, wobei die Vielzahl automatischer Ventile elektromagnetische Ventile (28, 30, 32, 34) beinhaltet.

3. Fahrzeugklimatisierungsvorrichtung nach Anspruch 2, wobei die elektromagnetischen Ventile jeweils aus dem Ein-Aus-Ventil (28, 30, 32, 34) oder einem Richtungswahlventil gebildet sind.

4. Fahrzeugklimatisierungsvorrichtung nach Anspruch 1, wobei die Vielzahl automatischer Ventile elektronische Expansionsventile (20, 22) beinhaltet und die elektronischen Expansionsventile so ausgelegt sind, dass durch Stoppen der Energiezufuhr zu den elektronischen Expansionsventilen deren Öffnungsgrad auf einen Öffnungsgrad unmittelbar vor dem Stoppen der Energiezufuhr fixiert werden kann.

5. Fahrzeugklimatisierungsvorrichtung nach Anspruch 1, ferner umfassend:
ein elektrisches Heizgerät (12), das die dem Fahrzeuginnenraum zugeführte Luft erwärmt, wenn die Fahrzeugklimatisierungsvorrichtung in der Heizbetriebsart betrieben wird.

6. Fahrzeugklimatisierungsvorrichtung nach Anspruch 1, wobei der mindestens eine interne Wärmetauscher einen kühlenden internen Wärmetauscher (8), mit dem die dem Fahrzeuginnenraum zugeführte Luft gekühlt wird, und einen heizenden internen Wärmetauscher (10), mit dem die dem Fahrzeuginnenraum zugeführte Luft erwärmt wird, beinhaltet, wobei
wenn die Fahrzeugklimatisierungsvorrichtung in der Heizbetriebsart betrieben wird, das Kältemittel durch den Strömungsweg, der den Verdichter (18), den heizenden internen Wärmetauscher (10) und den externen Wärmetauscher (16) beinhaltet, strömt und das Kältemittel nicht durch den kühlenden internen Wärmetauscher (8) strömt.

7. Fahrzeugklimatisierungsvorrichtung nach Anspruch 6, wobei
die Betriebsarten der Fahrzeugklimatisierungsvorrichtung zusätzlich zur Heizbetriebsart eine Entfeuchtungsheizbetriebsart aufweisen, in der das Kältemittel durch den Strömungsweg, der zumindest den Verdichter (18), den heizenden internen Wärmetauscher (10) und den kühlenden internen Wärmetauscher (8) beinhaltet, strömt, wobei
zumindest ein Teil (30, 34; 28, 30, 32, 34; 30, 32, 34) der Vielzahl automatischer Ventile in der Entfeuchtungsheizbetriebsart in einer anderen Stellung sind als in der Heizbetriebsart.

## Revendications

1. Dispositif de climatisation de véhicule, comprenant :
un circuit de fluide frigorigène incluant un compresseur (18) qui comprime un fluide frigorigène, un échangeur de chaleur externe (16) qui échange de la chaleur entre le fluide frigorigène et l'air extérieur, et au moins un échangeur de chaleur interne (8, 10) qui échange de la chaleur entre le fluide frigorigène et l'air introduit dans un intérieur de véhicule ; et
une pluralité de vannes automatiques électriques (20, 22, 28, 30, 32, 34), prévues dans le circuit de fluide frigorigène, permettant de changer un trajet d'écoulement de fluide frigorigène dans le circuit de fluide frigorigène afin de commuter entre des modes de fonctionnement du dispositif de climatisation de véhicule, **caractérisé en ce que**
le circuit de fluide frigorigène et la pluralité de vannes automatiques sont configurés de sorte qu'un trajet d'écoulement de fluide frigorigène pour un mode de chauffage puisse être formé lorsqu'aucune valve parmi la pluralité de vannes automatiques n'est alimentée en énergie.

2. Dispositif de climatisation de véhicule selon la revendication 1, où
la pluralité de vannes automatiques inclut des vannes électromagnétiques (28, 30, 32, 34).

3. Dispositif de climatisation de véhicule selon la revendication 2, où
les vannes électromagnétiques sont chacune formées de la vanne marche-arrêt (28, 30, 32, 34) ou d'une vanne sélectrice de direction.

4. Dispositif de climatisation de véhicule selon la revendication 1, où
la pluralité de vannes automatiques inclut des vannes d'expansion électroniques (20, 22), et les vannes d'expansion électroniques sont configurées de sorte que, par arrêt de l'excitation des vannes d'expansion électroniques, le degré d'ouverture de celles-ci puisse être fixé à un degré d'ouverture immédiatement avant l'arrêt de l'excitation.

5. Dispositif de climatisation de véhicule selon la revendication 1, comprenant en outre :
un chauffage électrique (12) qui chauffe l'air introduit dans l'intérieur du véhicule lors du fonctionnement du dispositif de climatisation de véhicule dans le mode de chauffage.

6. Dispositif de climatisation de véhicule selon la revendication 1, où
l'au moins un échangeur de chaleur interne inclut un échangeur de chaleur interne de refroidissement (8) permettant de refroidir l'air introduit dans l'intérieur du véhicule et un échangeur de chaleur interne de chauffage (10) permettant de chauffer l'air introduit dans l'intérieur du véhicule, où lorsque le dispositif de climatisation de véhicule est mis en fonctionnement dans le mode de chauffage, le fluide frigorigène s'écoule par le trajet d'écoulement incluant le compresseur (18), l'échangeur de chaleur interne de chauffage (10) et l'échangeur de chaleur externe (16), et le fluide frigorigène ne s'écoule pas par l'échangeur de chaleur interne de refroidissement (8).

7. Dispositif de climatisation de véhicule selon la revendication 6, où
les modes de fonctionnement du dispositif de climatisation de véhicule ont, en plus du mode de chauffage, un mode de chauffage de déshumidification dans lequel le fluide frigorigène s'écoule par le trajet d'écoulement incluant au moins le compresseur (18), l'échangeur de chaleur interne de chauffage (10), et l'échangeur de chaleur interne de refroidissement (8), où
au moins des vannes partielles (30, 34 ; 28, 30, 32, 34 ; 30, 32, 34) parmi la pluralité de vannes automatiques lorsqu'elles sont dans le mode de chauffage de déshumidification sont dans une position différente de celle dans le mode de chauffage.
